# EUROPEAN PATENT APPLICATION

(11) **EP 2 363 275 A2**
(43) Date of publication of application: **07.09.2011**
(21) Application number: 11151229.9
(22) Date of filing: 18.01.2011
(51) Int. Cl.: B29D 11/00

(54) **Optical element molding method and device**

(30) Priority: 05.03.2010 JP 2010048786
(71) Applicant: Fujifilm Corporation, Minato-ku Tokyo (JP)
(72) Inventor: Shimakawa, Jun, Kanagawa (JP); Miyamoto, Haruhiko, Kanagawa (JP); Fujiwara, Takayuki, Kanagawa (JP); Yoshioka, Masato, Kanagawa (JP)
(74) Representative: HOFFMANN EITLE

(57) **Abstract**

In an optical element molding method, a preform (P) disposed on a pit formed in the lower die (5) is heated to a temperature higher than the given molding temperature to melt at least a part of the preform (P); the heated preform (P) is cooled to the given molding temperature; and the preform (P) that has reached the given molding temperature is compressed inside the space enclosed by the upper die (6), the lower die (5) and the barrel die (7) to form an optical element.

## Description

### BACKGROUND OF THE INVENTION

The present invention relates to an optical element molding method and an optical element molding device, and particularly to an optical element molding method and an optical element molding device for molding an optical element through heating and compressing a preform.

A preform is often used for molding an optical element such as a lens. In producing the preform by injection molding, molten resin is filled into a cavity under a given injection pressure to mold a preform. When the injection pressure does not uniformly diffuse in the cavity and thus produces a pressure difference, the pressure difference remains inside the molded preform as residual stress.
Thus, when a preform having a residual stress is heated and compressed to produce an optical element, the residual stress is released when the preform is heated inside the mold, thus possibly causing a partial defect such as a deformation of the preform. The partial defect of the preform would be reflected in the optical element obtained through compression molding, causing a faulty transfer of the rim of the lens.

JP 2009-78470 A, for example, proposes heating and compressing a preform placed in a mold in such a manner that a partial defect such as a residual stress in the preform is located outside of the effective optical diameter of a molded optical element.

However, when such a defective part of the preform is located in the rim, even if the defective part is outside of the effective optical diameter of the molded optical element, this could cause faulty transfer of the rim of the optical element, possibly making positioning the optical element by means of the rim impossible.

### SUMMARY OF INVENTION

Thus, an object of the present invention is to overcome the above problems associated with the prior art and provide an optical element molding method and an optical element molding device whereby a faulty transfer of the optical element caused by residual stress in the preform is reduced.

An optical element molding method of molding an optical element comprising optical surfaces and a flange by compressing a preform at a given molding temperature according to the present invention comprises the steps of: heating the preform disposed on a pit formed in the lower die to a temperature higher than the given molding temperature to melt at least a part of the preform; cooling the heated preform to the given molding temperature; and compressing the preform that has reached the given molding temperature inside the space enclosed by the upper die, the lower die and the barrel die to form an optical element.

An optical element molding device of molding an optical element comprising optical surfaces and a flange by compressing a preform at a given molding temperature according to the present invention comprises: a mold for compressing the preform inside a space enclosed by the upper die, the lower die having a pit formed for receiving the preform thereon, and the barrel die; a heating section for heating the preform; a cooling section for cooling the preform; and a controller for controlling the heating section to heat the preform disposed on the lower die to a temperature higher than the given molding temperature to melt at least a part of the preform and controlling the cooling section to cool the heated preform to the given molding temperature.

### BRIEF DESCRIPTION OF DRAWINGS

Fig. 1 is a view illustrating a configuration of an optical element molding device according to an embodiment of the invention.
Fig. 2 is a flow chart illustrating the operation of the optical element molding device according to the embodiment.
Figs. 3A to 3C illustrate stepwise the method of molding an optical element according to the embodiment, Fig. 3A illustrating a preform heated inside a mold, Fig. 3B illustrating the preform melted inside the mold, Fig. 3C illustrating the preform subjected to compression molding inside the mold.
Fig. 4 is a sectional plan view illustrating how the preform melts on a lower die.
Fig. 5 is a sectional side view of a configuration of an optical element molding device according to a variation.
Fig. 6 is a sectional side view of a configuration of an optical element molding device according to another variation.
Fig. 7 is a sectional side view of a configuration of an opti cal element molding device according to still another variation.

### DETAILED DESCRIPTION OF INVENTION

The present invention will be described in detail referring to preferred embodiments illustrated in the attached drawings.

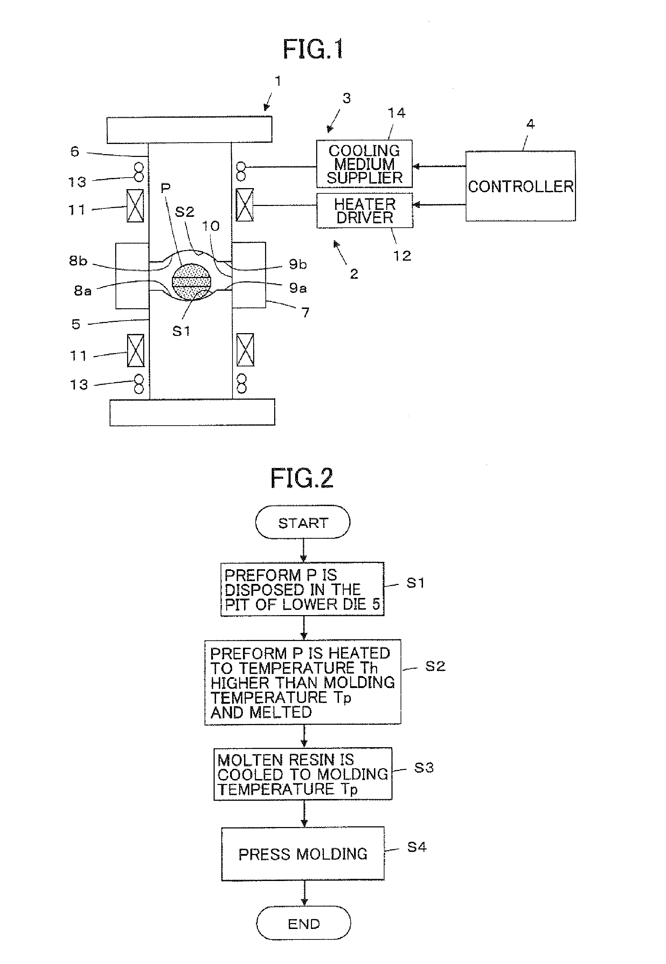

Fig. 1 illustrates a configuration of an optical element molding device according to an embodiment of the invention. The optical element molding device comprises a mold 1 for molding a preform P into an optical element such as a lens, a heating section 2 for heating the preform P in the mold 1, a cooling section 3 for cooling the preform P in the mold 1, and a controller 4 for controlling the heating section 2 and the cooling section 3.

The mold 1 comprises a fixedly provided lower die 5, an upper die 6 so provided as to move up and down with respect to the lower die 5, and a barrel die 7 having a cylindrical shape and so provided as to surround the periphery of the lower die 5 and the upper die 6.
The central part of the top surface of the lower die 5 receives the preform P and has an element body molding surface 8a forming a pit so as to shape the optical surface of the optical element. The element body molding surface 8a is surrounded by a horizontal flange molding surface 9a formed of a flat annular surface for forming the flange of the optical element. The pit of the element body molding surface 8a has a downwardly curved concave portion S1.
The central part of the bottom surface of the upper die 6 has an element body molding surface 8b forming another pit so as to shape the optical surface of the optical element. The element body molding surface 8b is surrounded by a horizontal flange molding surface 9b formed of a flat annular surface for forming the flange of the optical element. The pit of the element body molding surface 8b has an upwardly curved concave portion S2.
The element body molding surfaces 8a and 8b have a substantially circular shape.
The inner part of the barrel die 7 has a rim molding surface 10 for molding the rim of the optical element.

The heating section 2 comprises a heater 11 positioned around the peripheries of the upper die 6 and the lower die 5 to heat the preform P placed inside the mold 1 and a heater driver 12 for driving the heater 11.
The cooling section 3 comprises a cooling flow passage 13 positioned around the peripheries of the upper die 6 and the lower die 5 to cool the preform P placed inside the mold 1 and a cooling medium supplier 14 for supplying a cooling medium to the cooling flow passage 13 through a pump or the like. The cooling medium may be, for example, air, nitrogen, or water.
The controller 4 is electrically connected to the heater driver 12 and the cooling medium supplier 14. The controller 4 controls the heating section 2 and the cooling section 3 through the heater driver 12 and the cooling medium supplier 14 to control the temperature of the preform P placed inside the mold 1.

Next, the operation of the optical element molding device will be described referring to the flow chart illustrated in Fig. 2.

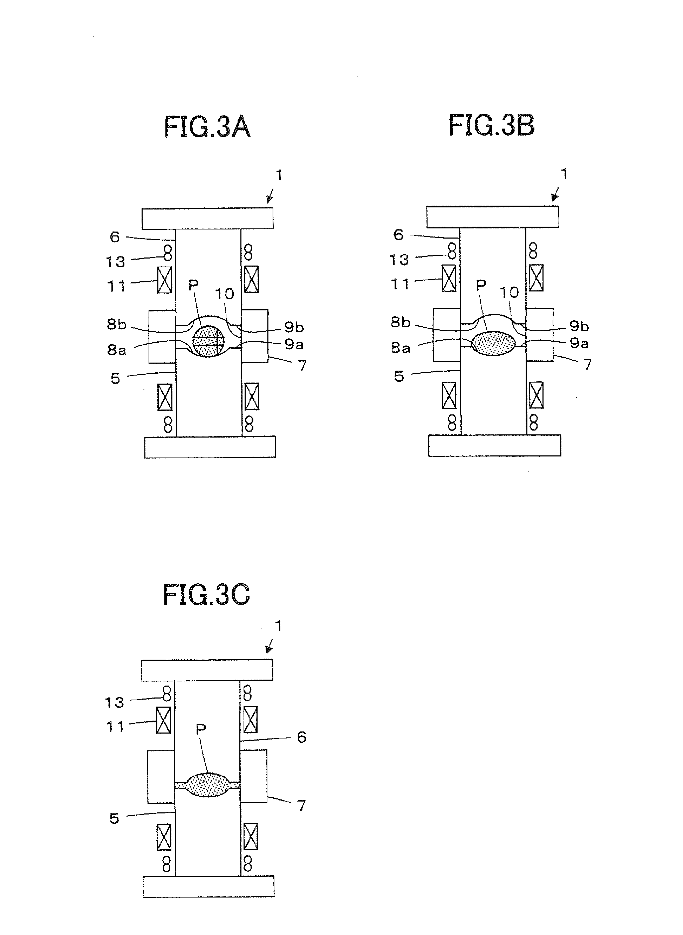

In step S1, the upper die 6 is lifted up until it reaches a position higher than the barrel die 7, and the preform P, which may be one produced by injection molding a thermoplastic resin material, is placed on the element body molding surface 8a formed in the top surface of the lower die 5. The upper die 6 is then lifted down to form a space sealed by the bottom surface of the upper die 6, the top surface of the lower die 5, and the inner surface of the barrel 7 as illustrated in Fig. 1 to accommodate the preform P therein.
Then, the controller 4 controls the heater driver 12 to heat the preform P placed on the element body molding surface 8a by the heater 11. Heating increases the temperature of the preform P and thus allows the residual stress in the preform P to be released, deforming the preform as illustrated in Fig. 3A.
Further, in step S2, the preform P is heated by the heating section 2 to a temperature Th that is higher than a given press molding temperature Tp, so that the preform P melts gradually.

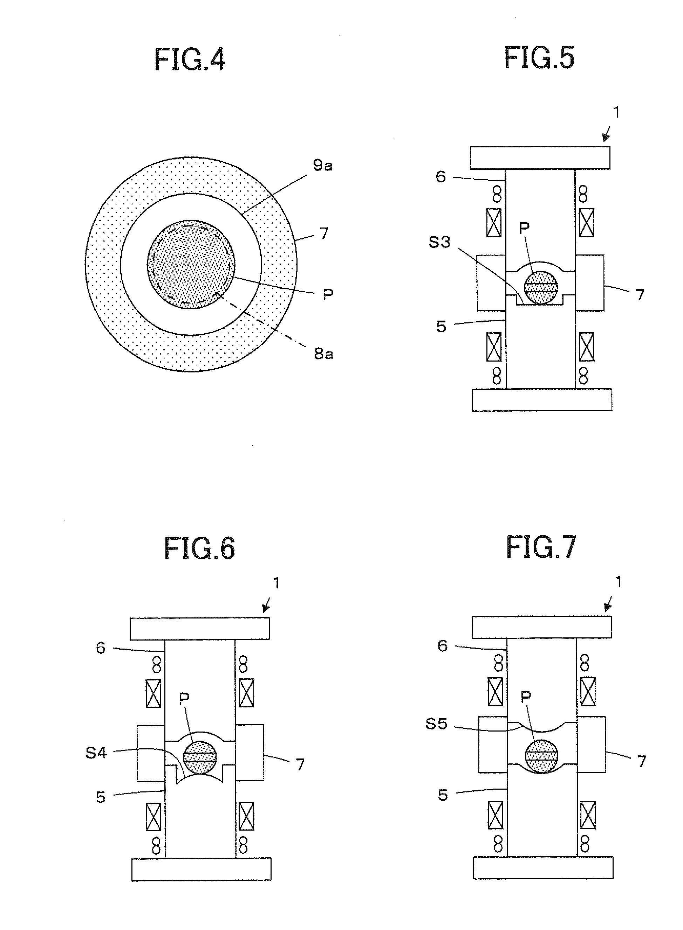

As the preform P progressively melts, the preform P increases its fluidity, so that it flows along the element body molding surface 8a in such a manner as to fill the pit of the element body molding surface 8a, so that the periphery of the preform P, as seen from above, forms the shape of a distortionless circle along the circular brim of the element body molding surface 8a as illustrated in Fig. 4. Thereafter, the molten preform P becomes to have a distortionless flat globular shape by surface tension on the element body molding surface 8a as illustrated in Fig. 3B.

If the preform P is kept at the temperature Th higher than the given press molding temperature Tp, the preform P may possibly melt entirely and flow over to the flange molding surface 9a to reach the inner surface of the barrel die 7. In step S3, therefore, the controller 4 controls the heating section 2 and the cooling section 3 to cool the preform P to the given molding temperature Tp and keep the preform P at the temperature Tp. This prevents the molten preform P from reaching the inner surface of the barrel die 7.
When the temperature of the preform P has reached the given press molding temperature Tp, the upper die 6 is lowered toward the lower die 5 in step S4 to achieve compression molding of the preform P as illustrated in Fig. 3C. In this step, optical surfaces are formed by the element body molding surface 8a of the lower die 5 and the element body molding surface 8b of the upper die 6 while a flange is formed by the flange molding surface 9a of the lower die 5 and the flange molding surface 9b of the upper die 6. Further, compression by the upper die 6 and the lower die 5 causes the periphery of the preform P to outwardly expand between the upper die 6 and the lower die 5 and abut on the rim molding surface 10 of the barrel die 7 to form a rim.

Thus, melting the preform P eliminates defects of the preform P produced by the residual stress, and compression molding of the preform P free from defects reduces generating of defects in the transfer of the optical surfaces, the flange and the rim.

Upon completion of compression molding of the preform P, the controller 4 terminates the heating of the preform P by the heating section 2 and cools the preform P to an ambient temperature through the cooling section 3 to manufacture the optical element.

According to the embodiment, the defects of the preform P caused by residual stress can be eliminated by heating the preform P to the temperature Th higher than the given press molding temperature Tp once to melt the preform P. Then, compression molding the preform P, now free from defects, permits reduction of defects in the transfer of the optical surfaces, the flange and the rim.

While the element body molding surface 8a of the lower die 5 forms a pit having a downwardly curved concave portion S1 according to the embodiment described above, the pit may be one having a flat portion S3 as illustrated in Fig. 5 or one having an upwardly curved convex portion S4 as illustrated in Fig. 6. Thus, the optical element produced can have a convex optical surface, a flat optical surface, or a concave optical surface on one side thereof.
While the element body molding surface 8b of the upper die 6 has an upwardly curved concave portion S2 to mold a convex optical surface on the other side of the optical element according to the embodiment described above, the element body molding surface 8b may have a flat portion or a convex portion so as to mold a flat surface or a concave surface. Thus, the optical element produced can have one of a convex optical surface, a flat optical surface and a concave optical surface on the other side thereof.
When the preform has a volume smaller than the inner volume of the pit formed by the element body molding surface 8a of the lower die 5 as in cases where, for example, the element body molding surface 8b of the upper die 6 has a downwardly curved concave portion S5 as illustrated in Fig. 7, the molten preform P may be allowed to melt completely because the molten preform P then cannot flow out over the element body forming surface 8a toward the barrel die 7.

The controller 4 may be adapted to control the cooling section 3 in such a manner as to cool the preform P to the given molding temperature Tp when the molten preform P has acquired a distortionless surface. For example, the preform P may be cooled to the given molding temperature Tp when the molten preform P has acquired a distortionless flat globular shape by surface tension, or the preform P may be cooled to the given molding temperature Tp when the periphery of the molten preform P has acquired the shape of a distortionless circle matching the brim of the element body molding surface 8a of the lower die 5. Alternatively, the preform P may be cooled to the given molding temperature Tp when the periphery of the molten preform P has acquired the shape of a distortionless circle along the element body molding surface 8a before the molten preform P acquires the shape of the brim of the element body molding surface 8a.

Further, the flange molding surface 9a of the lower die 5 may be adapted to have a wetting angle of a given value or greater with respect to the molten preform P. A wetting angle of the flange molding surface 9a with respect to the preform P can be set to be than a given value by, for example, roughing the surface 9a to form microscopic asperities thereon. Alternatively, one may use a material having a property such that the wetting angle is a given value or greater with respect to the molten preform P to form the whole flange molding surface 9a of such material, or the surface of the flange molding surface 9a may be coated by such material. This effectively restricts the molten preform P from flowing over the element body molding surface 8a toward the flange molding surface 9a and reaching the inner surface of the barrel die 7.
Although the preform P is melted by applying heat until the temperature of the preform reaches the value Th higher than the given molding temperature Tp according to the above embodiment, in cases where the preform P is formed of a material having a specified melting point, the preform P may be melted by heating it to a temperature higher than that melting point. When the melting point of the preform P is in a given range of temperature, heating may be applied so that the temperature of the preform P reaches a value higher than the minimum of the melting point temperature range.

## Claims

1. An optical element molding method of molding an optical element comprising optical surfaces and a flange by compressing a preform (P) at a given molding temperature (Tp) inside a space enclosed by an upper die (6), a lower die (5) and a barrel die (7), **CHARACTERIZED IN THAT**
the method comprises the steps of:
heating the preform (P) disposed on a pit formed in the lower die (5) to a temperature (Th) higher than the given molding temperature (Tp) to melt at least a part of the preform (P);
cooling the heated preform (P) to the given molding temperature (Tp); and
compressing the preform (P) that has reached the given molding temperature (Tp) inside the space enclosed by the upper die (6), the lower die (5) and the barrel die (7) to form an optical element.

2. The optical element molding method according to Claim 1, wherein the preform (P) is heated until the preform (P) reaches a temperature higher than a melting point of the preform (P).

3. The optical element molding method according to Claim 1 or 2, wherein the preform (P) is heated until a periphery of the molten preform (P) acquires a circular shape along a surface of the lower die (5) .

4. The optical element molding method according to any one of Claims 1 to 3, wherein heating and cooling of the preform (P) are controlled in such a manner as to prevent the molten preform (P) from reaching the inner surface of the barrel die (7).

5. The optical element molding method according to any one of Claims 1 to 4, wherein a wetting angle of a surface (9a) of the lower die (5) for molding the flange with respect to the molten preform (P) is a given value or greater.

6. The optical element molding method according to any one of Claims 1 to 5, wherein the preform (P) is produced by injection molding.

7. An optical element molding device of molding an optical element comprising optical surfaces and a flange by compressing a preform (P) at a given molding temperature (Tp) inside a space enclosed by an upper die (6), a lower die (5) and a barrel die (7), the device comprising:
a mold (1) for compressing the preform (P) inside a space enclosed by the upper die (6), the lower die (5) having a pit formed for receiving the preform thereon, and the barrel die (7);
a heating section (2) for heating the preform (P);
**CHARACTERIZED IN THAT**
the device further comprises:
a cooling section (3) for cooling the preform (P); and
a controller (4) for controlling the heating section (2) to heat the preform (P) disposed on the lower die (5) to a temperature (Th) higher than the given molding temperature (Tp) to melt at least a part of the preform (P) and controlling the cooling section (3) to cool the heated preform (P) to the given molding temperature (Tp).

8. The optical element molding device according to Claim 7, wherein the controller (4) controls the heating section (2) and the cooling section (3) to heat and cool the preform (P) in such a manner as to prevent the molten preform (P) from reaching an inner surface of the barrel die (7).

9. The optical element molding device according to Claim 7 or 8, wherein a surface (9a) of the lower die (5) for molding the flange has a wetting angle of a given value or greater with respect to the molten preform (P).

10. The optical element molding device according to any one of Claims 7 to 9, wherein the pit formed in the lower die (5) has a downwardly curved concave portion (S1).

11. The optical element molding device according to any one of Claims 7 to 9, wherein the pit formed in the lower die (5) has a horizontal planar portion (S3).

12. The optical element molding device according to any one of Claims 7 to 9, wherein the pit formed in the lower die (5) has an upwardly curved convex portion (S4).
